# EUROPÄISCHE PATENTSCHRIFT

(11) **EP 1 430 561 B1**
(45) Veröffentlichungstag und Bekanntmachung des Hinweises auf die Patenterteilung: **18.01.2012**
(21) Anmeldenummer: 02764883.1
(22) Anmeldetag: 16.09.2002
(51) Int. Cl.: H01M 8/24

(54) **BRENNSTOFFZELLENBLOCK**
FUEL CELL BLOCK
SECTION DE PILE A COMBUSTIBLE

(30) Priorität: 27.09.2001 EP 01123174
(43) Veröffentlichungstag der Anmeldung: 23.06.2004
(73) Patentinhaber: SIEMENS AKTIENGESELLSCHAFT, 80333 München (DE)
(72) Erfinder: ISMAIER, Norbert, 91353 Hausen (DE); LERSCH, Josef, 91336 Heroldsbach (DE); MATTEJAT, Arno, 91088 Bubenreuth (DE)
(86) Internationale Anmeldenummer: PCT/EP2002/010373
(87) Internationale Veröffentlichungsnummer: WO 2003/030291

(56) Entgegenhaltungen:
- EP-A- 0 959 511
- EP-A- 1 098 381
- DE-A- 10 006 472
- DE-A- 10 049 801
- DE-A- 19 953 799
- DE-C- 19 822 697
- PATENT ABSTRACTS OF JAPAN vol. 2000, no. 22, 9. März 2001 (2001-03-09) -& JP 2001 143734 A (ISUZU MOTORS LTD), 25. Mai 2001 (2001-05-25) -& DATABASE WPI Derwent Publications Ltd., London, GB; AN 2001-428157 XP002192921 & JP 2001 143734 A (ISUZU MOTORS LTD), 25. Mai 2001 (2001-05-25)
- PATENT ABSTRACTS OF JAPAN vol. 2000, no. 16, 8. Mai 2001 (2001-05-08) -& JP 2001 006718 A (HONDA MOTOR CO LTD), 12. Januar 2001 (2001-01-12) -& DATABASE WPI Week 200118 Derwent Publications Ltd., London, GB; AN 2001-174948 XP002192922 & JP 2001 006718 A (HONDA MOTOR CO LTD), 12. Januar 2001 (2001-01-12)
- PATENT ABSTRACTS OF JAPAN vol. 1996, no. 11, 29. November 1996 (1996-11-29) -& JP 08 195215 A (TOYOTA MOTOR CORP), 30. Juli 1996 (1996-07-30)

## Beschreibung

Die Erfindung bezieht sich auf einen Brennstoffzellenblock mit einer Anzahl von aufeinander gestapelten planaren Brennstoffzellen, einer Endplatte und einem durch die Endplatte hindurch verlaufenden Betriebsmittelkanal.

Bei der Elektrolyse von Wasser werden die Wassermoleküle durch elektrischen Strom in Wasserstoff (H₂) und Sauerstoff (O₂) zerlegt. In einer Brennstoffzelle läuft unter anderem dieser Vorgang in umgekehrter Richtung ab. Durch eine elektrochemische Verbindung von Wasserstoff und Sauerstoff zu Wasser entsteht elektrischer Strom mit hohem Wirkungsgrad und, wenn als Brenngas reiner Wasserstoff eingesetzt wird, ohne Emission von Schadstoffen und Kohlendioxid (CO₂).

Die technische Umsetzung des Prinzips der Brennstoffzelle hat zu unterschiedlichen Lösungen, und zwar mit verschiedenartigen Elektrolyten und mit Betriebstemperaturen zwischen 80°C und 1000°C, geführt. In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen voneinander unterscheiden.

Zum Betrieb werden einer Brennstoffzelle Betriebsmittel zugeführt, wie z.B. die Betriebsgase, Befeuchtungswasser und Kühlwasser. Als Betriebsgase dienen ein wasserstoffhaltiges Brenngas und ein sauerstoffhaltiges Oxidationsgas. Als Brenngase können beispielsweise Erdgas, Kohlegas oder auch reiner Wasserstoff verwendet werden und als Oxidationsgas findet in der Regel Luft oder reiner Sauerstoff Verwendung. Befeuchtungswasser wird manchen Ausführungsformen von Niedertemperatur-Brennstoffzellen, insbesondere Brennstoffzellen mit einer Polymer-Elektrolyt-Membran (PEM-Brennstoffzellen) zugeführt, deren Membran feucht gehalten werden muss. Hierbei werden die Betriebsgase in einer geeigneten Einrichtung, beispielsweise einem Flüssigkeits-Ringverdichter oder in Befeuchterzellen, auf die Temperatur der Brennstoffzelle aufgeheizt und mit Wasserdampf gesättigt.

Eine einzelne Brennstoffzelle liefert eine Betriebsspannung von maximal etwa 1,1 V. Daher wird eine Vielzahl von Brennstoffzellen zu einer Brennstoffzellenstapel zusammengeschlossen, der Bestandteil eines Brennstoffzellenblocks ist. Durch das In-Reihe-Schalten der Brennstoffzellen kann die Betriebsspannung eines Brennstoffzellenblocks 100 V und mehr betragen.

Ein Brennstoffzellenblock umfasst außer mindestens einem Brennstoffzellenstapel in der Regel auch einen Befeuchtungszellenstapel und ein sogenanntes Betriebsteil - auch Versorgungsteil genannt. Der Befeuchtungszellenstapel umfasst eine Anzahl von Zellen, in denen die Betriebsgase mit Hilfe einer Membran befeuchtet werden. Der Versorgungsteil beherbergt Aggregate wie beispielsweise Pumpen, Verdichter und Befeuchter sowie Vorrichtungen wie Ventile, Sensoren, elektronische Überwachungseinrichtungen, Wasserabscheider und einiges mehr. Der Zusammenschluss der Aggregate erfolgt durch eine Vielzahl von Leitungen und Rohrverbindungen. Diese Rohrverbindungen sind grundsätzlich anfällig für Leckagen. Hierbei gefährden Leckstellen in Leitungen, die ein Betriebsgas führen, die Betriebssicherheit in besonderem Maße, da durch die Verwendung von wasserstoff- und sauerstoffhaltigen Betriebsgasen um ein Leck herum Brandgefahr, eventuell sogar Explosionsgefahr besteht. Bei der Verwendung eines Brennstoffzellenblocks in einem Fahrzeug kommt zusätzlich erschwerend hinzu, dass der Brennstoffzellenblock Stößen und Erschütterungen ausgesetzt ist.

Es ist die Aufgabe der Erfindung, einen Brennstoffzellenblock anzugeben, der auch bei einem durch Erschütterungen gekennzeichneten Betrieb hohen Sicherheitsanforderungen bezüglich der Dichtigkeit der Rohrverbindungen genügt.

Diese Aufgabe wird durch einen Brennstoffzellenblock der eingangs genannten Art gelöst, bei dem erfindungsgemäß ein Wasserabscheider zumindest teilweise im Betriebsmittelkanal angeordnet und zumindest teilweise in die Endplatte integriert ist.

Die verschiedenen Bauteile eines Brennstoffzellenblocks, also der oder die Brennstoffzellenstapel, gegebenenfalls ein Befeuchtungszellenstapel und der Versorgungsteil werden von mindestens einer, in der Regel beidseitig von einer Endplatte begrenzt. Eine Endplatte befindet sich somit an einem Ende des Brennstoffzellenblocks oder zwischen zwei seiner Bauteile. Eine Endplatte ist in der Regel eine stabile Metallplatte, die dem Brennstoffzellenblock eine gewisse Stabilität verleiht. Eine zwischen zwei Bauteilen angeordnete Endplatte wird auch Zwischenplatte genannt. Die den Versorgungsteil nach außen abgrenzende Endplatte beherbergt Anschlüsse des Brennstoffzellenblocks. In diese auch als Anschlussplatte bezeichnete Endplatte sind Durchführungen für beispielsweise die Betriebemittelzuführungen, Abgasabführungen, Durchführungen zum Abgriff des erzeugten elektrischen Stroms oder von Messsignalen eingearbeitet. Eine Endplatte, die einen Brennstoffzellenstapel oder einem Befeuchtungszellenstapel begrenzt, ist der jeweils äußersten Verbundleiterplatte bzw. Trennplatte des Stapels benachbart, wobei sich je nach Ausführungsform des Brennstoffzellenblocks zwischen der äußersten Verbundleiterplatte und der Endplatte auch weitere Bauteile befinden können.

Die Erfindung geht von der Überlegung aus, dass die Betriebssicherheit eines Brennstoffzellenblocks um so höher ist, je weniger Dicht- und Verbindungsstellen die Betriebsmittelzuund -Abführleitungen im Versorgungsteil des Brennstoffzellenblocks aufweisen. Außerdem geht die Erfindung von der Überlegung aus, dass eine Verbindungsstelle, beispielsweise ein Anschluss zwischen einem Rohrstück und einem Ventil, um so anfälliger gegen Undichtigkeit ist, je größer die mechanische Belastung ist, der diese Verbindungsstelle ausgesetzt ist. Bei der Zuführung eines Betriebsmittels, beispielsweise eines Betriebsgases, zu den Brennstoffzellen wird das Betriebsgas zuerst mittels eines Anschlusses durch die Anschlussplatte hindurchgeführt, durchläuft dann innerhalb des Versorgungsteils ein Rohrstück, um dann zu einem Ventil zu gelangen, mit dessen Hilfe die Betriebsgaszufuhr zum Brennstoffzellenstapel gesteuert wird. Eine Reduzierung von Verbindungsstellen innerhalb des Versorgungsteils des Brennstoffzellenblocks wird erreicht, wenn das Ventil direkt an der Anschlussplatte angeordnet ist. Somit entfällt das Rohrstück zwischen Anschlussplatte und Ventil. Um eine besonders hohe Belastbarkeit der Verbindungsstelle zwischen Anschlussplatte und Ventil zu erreichen, wird das Ventil teilweise in die Anschlussplatte integriert. In die Anschlussplatte wird beispielsweise ein Ventilsitz eingebracht, in den das Ventil bei der Montage des Brennstoffzellenblocks fest eingefügt wird. Ventil und Anschlussplatte bilden somit einen festen Verbund. Hierdurch wird erreicht, dass die Dichtung innerhalb der Verbindungsstelle zwischen Ventil und Anschlussplatte nur einer sehr geringen mechanischen Belastung ausgesetzt ist.

Durch die zumindest teilweise Integration eines Wasserabscheiders in eine Endplatte eines Brennstoffzellenblocks wird somit erreicht, dass bisher übliche Rohrstücke zwischen einer solchen Endplatte und einem Wasserabscheider eingespart werden. Hierdurch wird die Anzahl der Verbindungsstellen innerhalb des Brennstoffzellenblocks verringert und somit die Betriebssicherheit bezüglich Undichtigkeiten innerhalb des Brennstoffzellenblocks erhöht. Durch die teilweise Integration wird erreicht, dass der Wasserabscheider starr mit der Endplatte verbunden ist und eine Dichtstelle zwischen der Endplatte und dem Wasserabscheider innerhalb der Endplatte angeordnet ist. Hierdurch wird eine geringe mechanische Belastung dieser Dichtstelle erreicht, was wiederum zu einer Erhöhung der Betriebssicherheit des Brennstoffzellenblocks führt. Dieser Vorteil wird in besonderem Maße dann erreicht, wenn der Wasserabscheider vollständig in die Endplatte integriert ist und somit also vollständig von der Endplatte aufgenommen ist. Am Beispiel des oben geschilderten Ventils bedeutet dies, dass das Ventil vollständig in die Endplatte eingearbeitet ist und somit die Dichtstelle zwischen Anschlussplatte und Ventil wie auch die Dichtstelle zwischen Ventil und einem nachfolgenden Rohrteil oder einer weiteren Betriebsmittel-Steuervorrichtung unmittelbar in bzw. an der Endplatte angeordnet ist. Hierdurch sind beide Dichtstellen nur geringer mechanischer Belastung ausgesetzt. Bei vollständiger Integration eines Wasserabscheiders in die Endplatte kann u.U. sogar die Dichtstelle zwischen Endplatte und Wasserabscheider entfallen, weil der Wasserabscheider nahtlos in die Endplatte übergeht.

Durch die Erfindung wird der zusätzliche Vorteil erreicht, dass durch die zumindest teilweise Integration eines Wasserabscheiders in die Endplatte Rohrstücke und somit auch Platz eingespart wird. Der Versorgungsteil und somit der gesamte Brennstoffzellenblock können hierdurch kompakt ausgeführt werden. Das Ensemble aus Brennstoffzellenstapel und Versorgungsteil ist somit durch die Erfindung besonders stabil und besonders platzsparend ausgeführt. Dies ist besonders in Fahrzeugen von Vorteil, in denen nicht nur die mechanischen Belastungen sondern auch das knappe Raumangebot innerhalb des Fahrzeugs hohe Anforderungen an den Brennstoffzellenblock stellen.

Bei der Zusammenführung von Wasserstoff (H₂) und Sauerstoff (O₂) in einer Brennstoffzelle entsteht Wasser (H₂O). Dieses Produktwasser muss aus der Brennstoffzelle ausgeführt werden. Das Produktwasser wird beispielsweise im Strom des aus den Brennstoffzellen herausgeführten und nicht in den Brennstoffzellen verbrauchten Betriebsgases mitgeführt und muss aus diesem Strom entfernt werden. Zu diesem Zweck wird nicht in den Brennstoffzellen verbrauchtes Betriebsgas durch einen Wasserabscheider hindurchgeführt, in dem das Wasser vom Betriebsgas separiert wird. Bei manchen Typen von Niedertemperatur-Brennstoffzellen, insbesondere bei PEM-Brennstoffzellen, werden die Betriebsgase befeuchtet in die Brennstoffzellen eingebracht, da der Elektrolyt der Brennstoffzelle ständig feucht gehalten werden muss. Bei einem Brennstoffzellenblock mit solchen Brennstoffzellen ist ein Wasserabscheider in der Regel auch in den Betriebsmittelzuleitungen angeordnet, mit denen das befeuchtete Betriebsmittel den Brennstoffzellen zugeleitet wird. Während des Betriebs der Brennstoffzellen kann es vorkommen, dass Befeuchtungswasser innerhalb dieser Rohrzuleitungen auskondensiert. Damit dieses auskondensierte Befeuchtungswasser die Brennstoffzelle nicht beflutet, ist ein wasserabscheider zumindest teilweise in einer der Endplatten integriert angeordnet, beispielsweise der Zwischenplatte. Das im Versorgungsteil des Brennstoffzellenblocks befeuchtete Betriebsgas wird somit unmittelbar vor Eintritt in den Brennstoffzellenstapel durch einen Wasserabscheider an oder in der Zwischenplatte hindurchgeführt. Außerdem wird erreicht, dass der Wasserabscheider starr und besonders stabil und dicht mit der Endplatte verbunden ist.

Besonders vorteilhaft ist die vollständige Integration des Wasserabscheiders in die Endplatte. Hierdurch entfallen Dichtstellen zwischen Rohrverbindungen und dem Wasserabscheider vollständig. Außerdem wird hierdurch in besonderem Maße Bauvolumen eingespart. Das Betriebsmittel wird in die Endplatte eingeführt, im dortigen Wasserabscheider von überflüssigen Befeuchtungs- oder Produktwasser befreit und dann aus der Endplatte wieder herausgeführt.

Zweckmäßigerweise ist das Entleerungsventil des Wasserabscheiders teilweise oder vollständig in die Endplatte integriert. Ebenfalls zweckmäßigerweise ist auch der Wasserniveaugeber teilweise oder vollständig in die Endplatte integriert. Durch eine solche Ausführung werden Undichtigkeiten zwischen Entleerungsventil bzw. Wasserniveau und Wasserabscheider wirksam vermieden. Außerdem ist hierdurch der Versorgungsteil und somit der Brennstoffzellenblock besonders kompakt ausgeführt.

Ein weiterer Vorteil der Erfindung wird durch einen in die Endplatte eingearbeiteten Verbindungskanal zur Verbindung von zwei parallel zur Stapelrichtung der Zellen ausgerichteten Axialkanälen miteinander erreicht. Axialkanäle innerhalb eines Brennstoffzellenstapels dienen zur Versorgung und Entsorgung der Brennstoffzelle mit Betriebsgasen und Kühlwasser. Als Beispiel sei hier ein Kühlwasser führender Kanal innerhalb der Endplatte beschrieben: In Abhängigkeit vom Kühlungskonzept des Brennstoffzellenstapels wird beispielsweise Kühlwasser aus dem Versorgungsteil des Brennstoffzellenblocks in einen Axialkanal geleitet und dort durch den Brennstoffzellenstapel hindurchgeführt, verteilt sich aus dem Axialkanal in die Brennstoffzellen des Stapels, um sich in einem weiteren Axialkanal wieder zu sammeln. Am Ende des Brennstoffzellenstapels wird das Kühlwasser in einen weiteren Axialkanal gelenkt, der das Kühlwasser wieder zurück zum Versorgungsteil des Brennstoffzellenblocks führt. Die Verbindungsleitung zwischen dem Kühlwasser aufsammelnden Axialkanal und dem Axialkanal, der das Kühlwasser zum Versorgungsteil des Brennstoffzellenblocks zurückführt, ist als ein Kanal innerhalb der den Brennstoffzellenstapel nach außen hin begrenzenden Endplatte ausgestaltet. Auf diese Weise wird ein Verbindungsstück zwischen den beiden Axialkanälen zusammen mit den zusätzlich benötigten Dichtungsstellen vermieden. Hierdurch wird Sicherheit gewonnen und Raum eingespart. Da die metallischen Endplatten dem gesamten Brennstoffzellenblock Stabilität verleihen, sind sie in der Regel in einer solchen Dicke ausgeführt, dass sie problemlos eine Betriebsmittel-Steuervorrichtung oder einen Betriebsmittelkanal beherbergen können.

Zweckmäßigerweise ist ein Wasserabscheider im Verbindungskanal angeordnet und in die Endplatte integriert. Ein zu entwässerndes Betriebsgas muss bei einer solchen Ausgestaltung nicht durch zusätzliche Rohrleitungen zu einem Wasserabscheider geführt werden, sondern wird direkt nach Austritt oder direkt vor Eintritt in den Brennstoffzellenstapel entwässert. Hierdurch wird der zusätzliche Vorteil erzielt, dass das Betriebsgas keiner Abkühlung in ansonsten notwendigen Rohrleitungen unterliegt, in denen zusätzliches Wasser durch Kondensation ausgeschieden würde. Das Betriebsgas wird hierdurch auf der Temperatur der Endplatte gehalten und kann mit dieser leicht kontrollierbaren Temperatur in den Brennstoffzellenstapel eingeleitet werden.

Vorteilhafterweise umfasst der Brennstoffzellenblock mehrere kaskadenartig angeordnete Brennstoffzellenblock-Stufen, wobei der erste Axialkanal zum Betriebsmittelabtransport aus einer Brennstoffzellenblock-Stufe und der zweite Axialkanal zur Betriebsmittelversorgung einer folgenden Brennstoffzellenblock-Stufe vorgesehen ist. Ein in mehrere Blockstufen - auch Kaskadenstufen genannt - unterteilter Brennstoffzellenblock ist besonders geeignet für einen Betrieb, in dem der Wasserstoff (H₂) und Sauerstoff (O₂) aus dem Brenngas bzw. dem Oxidationsgas vollständig innerhalb des Brennstoffzellenblocks verbraucht werden. Ein solcher Block wird vor allem für den Betrieb mit reinem Wasserstoff und reinem Sauerstoff verwendet, da hierbei die Betriebsgase vollständig verbraucht werden und der Brennstoffzellenblock abgesehen von geringen Inertgasanteilen kein Abgas erzeugt. Ein solcher Brennstoffzellenblock zeichnet sich durch eine Anzahl von aneinander angrenzenden Brennstoffzellenstapeln aus, die beispielsweise durch Zwischenplatten jeweils voneinander getrennt sind. Die Betriebsgase und auch das Kühlwasser werden durch komplexe Rohr- oder Kanalführungen durch die einzelnen Kaskadenstufen des Brennstoffzellenblocks hindurchgeführt. Ein großer Teil von Verrohrungen in direkter Umgebung der Brennstoffzellenstapel kann durch die Ausgestaltung von Verbindungskanälen innerhalb von einer oder mehreren Endplatten am Ende oder zwischen den Kaskadenstufen vermieden werden. Hierdurch wird eine große Anzahl von Dichtstellen vermieden und der Raum für die ansonsten nötige Verrohrung eingespart.

Ausführungsbeispiele der Erfindung werden anhand von drei Figuren näher erläutert. Dabei zeigen:
- FIG 1: einen Brennstoffzellenblock mit einem Versorgungteil, einem Befeuchtungszellenstapel, zwei Brennstoffzellenstapeln und fünf Endplatten;
- FIG 2: eine Endplatte mit integriertem Wasserabscheider;
- FIG 3: ein in eine Endplatte integriertes Ventil und ein Temperatursensor.

Einander entsprechende Gegenstände sind in den Figuren mit gleichen Bezugszeichen versehen.

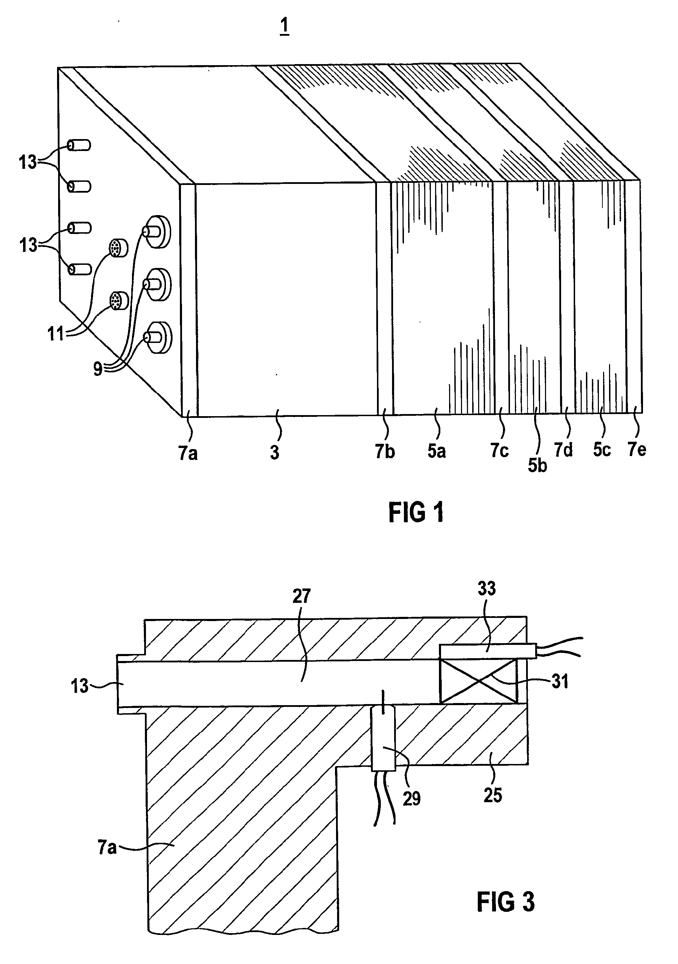

Figur 1 zeigt in stark vereinfachter und schematischer Weise einen Brennstoffzellenblock 1 mit einem Versorgungsteil 3, einem Befeuchtungszellenstapel 5a und zwei Brennstoffzellenstapeln 5b, 5c aus PEM-Brennstoffzellen. Die Stapel sind zwei Kaskadenstufen des Brennstoffzellenblocks 1. Das Versorgungsteil 3, der Befeuchtungszellenstapel 5a und die zwei Brennstoffzellenstapel 5b, 5c sind jeweils von einer Endplatte 7a, 7b, 7c, 7d, 7e begrenzt. Die Endplatte 7a ist als Anschlussplatte ausgestaltet. Die Anschlussplatte weist eine Anzahl von Stromanschlüssen 9 zum Abgreifen des im Brennstoffzellenblock 1 erzeugten Stroms auf. Außerdem weist sie Messfühlerausgänge 11 und Betriebsmittelanschlüsse 13 auf, die der Zuund Abführung von Betriebsmitteln zum bzw. vom Brennstoffzellenblock 1 dienen. Die Endplatten 7b und 7c begrenzen den Befeuchtungszellenstapel 5a und die Endplatten 7c, 7d und 7e begrenzen die Brennstoffzellenstapel 5b und 5c. Die drei Endplatten 7b, 7c und 7d sind als Zwischenplatten mit einer Anzahl durch die Platten hindurch verlaufender in der Figur nicht gezeigter Betriebsmittelkanäle ausgestaltet. Die den Brennstoffzellenstapel 5c begrenzende Endplatte 7e schließt den Brennstoffzellenblock 1 nach außen ab.

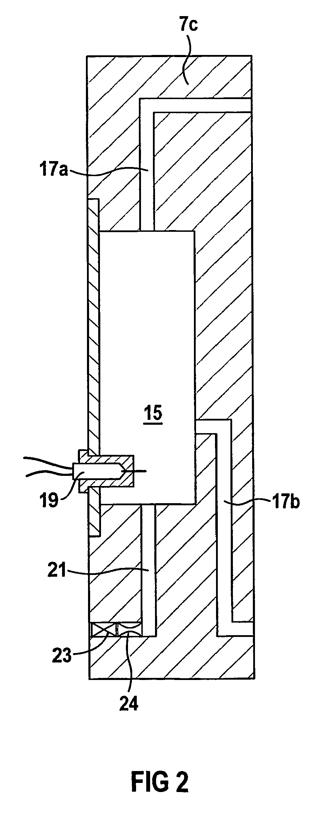

Figur 2 zeigt die Endplatte 7c, die als Zwischenplatte zwischen dem Befeuchtungszellenstapel 5a und dem Brennstoffzellenstapel 5b des Brennstoffzellenblocks 1 angeordnet ist. In die Endplatte 7c ist ein Wasserabscheider 15 eingearbeitet, der vollständig in die Endplatte 7c integriert ist. In den Wasserabscheider 15 mündet ein Verbindungskanal 17a, der einen in Stapelrichtung des Brennstoffzellenstapels 5b verlaufenden Axialkanal des Brennstoffzellenstapels 5b mit dem Wasserabscheider 15 verbindet. Während des Betriebs des Brennstoffzellenblocks 1 strömt sauerstoffhaltiges Oxidationsgas durch die Brennstoffzellen des Brennstoffzellenstapels 5b, sammelt sich im am Verbindungskanal angeschlossenen Axialkanal des Brennstoffzellenstapels 5b und strömt durch den Verbindungskanal 17b in den Wasserabscheider 15. Im Wasserabscheider 15 wird das im Oxidationsgas mitgeführte Produktwasser aus den Brennstoffzellen des Brennstoffzellenstapels 5b aus dem Oxidationsgas ausgeschieden und sammelt sich im unteren Teil des Wasserabscheiders 15.

Das von überschüssigem Produktwasser befreite Oxidationsgas strömt im weiteren Verlauf durch den Verbindungskanal 17a in einen zweiten Axialkanal, der durch den Brennstoffzellenstapel 5a hindurch und bis zum Brennstoffzellenstapel 5c führt. Der zweite Axialkanal dient somit zur Betriebsmittelversorgung des Brennstoffzellenstapels 5c mit Oxidationsgas. Die Verbindungskanäle 17a und 17b können als ein einziger Verbindungskanal angesehen werden, der den im Brennstoffzellenstapel 5b hineinragenden ersten Axialkanal mit dem im Brennstoffzellenstapel 5c hineinragenden zweiten Axialkanal verbindet.

Der Wasserabscheider 15 umfasst eine als Wasserwächter ausgestaltete Betriebsmittelsteuervorrichtung 19, die vollständig in die Endplatte 7c integriert ist. Steigt der Wasserpegel des sich im unteren Teil des Wasserabscheiders 15 angesammelten Produktwassers über einen vorgegebenen Pegel, so gibt der Wasserwächter ein Signal an eine in Figur 2 nicht näher gezeigte Steuereinheit, die drauf hin das Öffnen Ventils 23 auslöst. Hierdurch erfolgt die Entleerung des Wasserabscheiders 15 vom Produktwasser durch den Entleerungskanal 21 der Endplatte 7c. Im Entleerungskanal 21 ist eine als Strömungswächter ausgestaltete Betriebsmittelsteuervorrichtung 24 angeordnet. Der Strömungswächter ist vollständig in den Entleerungskanal 21 versenkt und somit in die Endplatte 7c komplett integriert.

Durch die vollständige Integration des Wasserabscheiders 15 in die Endplatte 7c sind keine Verbindungsstellen und keine Dichtungen zwischen dem Wasserabscheider 15 und den Verbindungskanälen 17a und 17b sowie dem Entleerungskanal 21 notwendig. Außerdem entfällt jegliche Verrohrung zum und vom Wasserabscheider 15. Die Oxidationsmittelführung durch den Wasserabscheider 15 kann somit sehr sicher durchgeführt werden. Außerdem sind der Wasserabscheider und die Verbindungskanäle 17a, 17b sowie der Entleerungskanal 21 mit dem Strömungswächter sehr kompakt ausgeführt. Dies verringert das Bauvolumen des gesamten Brennstoffzellenblocks 1.

Figur 3 zeigt in schematischer Darstellung einen Schnitt durch die als Anschlussplatte ausgestaltete Endplatte 7a. Die Anschlussplatte weist einen Dom 25 auf, durch den ein Betriebsmittelkanal 27 hindurchreicht. Der Betriebsmittelkanal 27 verbindet einen der Betriebsmittelanschlüsse 13 mit im Versorgungsteil 3 des Brennstoffzellenblocks 1 angeordneten Versorgungsvorrichtungen des Brennstoffzellenblocks 1. In den Betriebsmittelkanal 27 hineinragend ist eine als Temperaturfühler ausgestaltete Betriebsmittelsteuervorrichtung 29 angeordnet. Der Temperaturfühler ist so in die Endplatte 7a eingesetzt, dass er vollständig in die Endplatte 7a integriert ist. Ebenfalls im Betriebsmittelkanal 27 angeordnet ist eine weitere Betriebsmittelsteuervorrichtung 31 angeordnet, die als ein Ventil ausgeführt ist. Am Ventil angeordnet ist die als Stellglied des Ventils ausgeführte Betriebsmittelsteuervorrichtung 33, die genauso wie das Ventil selber so in die Endplatte 7a eingesetzt ist, dass sie ebenfalls vollständig in die Endplatte 7a integriert ist.

Durch die Integration der Betriebsmittelsteuervorrichtungen 29, 31 und 33 in die Endplatte 7a sind sie sehr fest und starr mit der Endplatte 7a verbunden sind. Hierdurch treten keine mechanischen Beanspruchungen entlang der die Betriebsmittelsteuervorrichtungen 29, 31 und 33 umgebenden Dichtflächen auf. Es kann somit eine hohe Sicherheit bezüglich der Dichtigkeit dieser Dichtstellen gewährleistet werden.

## Patentansprüche

1. Brennstoffzellenblock (1) mit einer Anzahl von aufeinander gestapelten planaren Brennstoffzellen, einer Endplatte (7a - 7e) und einem durch die Endplatte (7a-7e) hindurchverlaufenden Betriebsmittelkanal (17a, 17b, 27),
**gekennzeichnet durch** einen zumindest teilweise im Betriebsmittelkanal (17a, 17b, 27) angeordneten und zumindest teilweise in die Endplatte (7a, 7c) integrierten Wasserabscheider (15).

2. Brennstoffzellenblock (1) nach Anspruch 1,
**dadurch gekennzeichnet, dass** der Wasserabscheider (15) vollständig in die Endplatte (7c) eingearbeitet ist.

3. Brennstoffzellenblock (1) nach einem der vorhergehenden Ansprüche, **gekennzeichnet durch** einen ersten und einen zweiten parallel zur Stapelrichtung der Zellen ausgerichteten Axialkanal und einen in die Endplatte (7c) eingearbeiteten Verbindungskanal (17a, 17b) zur Verbindung der beiden Axialkanäle, wobei der Wasserabscheider (15) in dem Verbindungskanal (17a, 17b) angeordnet und in die Endplatte (7c) integriert ist.

4. Brennstoffzellenblock (1) nach Anspruch 3,
**gekennzeichnet durch** mehrere kaskadenartig angeordneten Brennstoffzellenblock-Stufen (5b, 5c), wobei der erste Axialkanal zum Betriebsmittelabtransport aus einer Kaskadenstufe (5b) und der zweite Axialkanal zur Betriebsmittelversorgung einer folgenden Kaskadenstufe (5c) vorgesehen ist.

## Claims

1. Fuel cell block (1) having a number of planar fuel cells stacked on top of one another, an end plate (7a-7e) and an operating-medium passage (17a, 17b, 27) which runs through the end plate (7a-7e), **characterized by** a water separator (15) which is at least partially arranged in the operating-medium passage (17a, 17b, 27) and is at least partially integrated in the end plate (7a, 7c).

2. Fuel cell block (1) according to Claim 1, **characterized in that** the water separator (15) is completely incorporated in the end plate (7c).

3. Fuel cell block (1) according to one of the preceding claims, **characterized by** a first and a second axial passage, oriented parallel to the stack direction of the cells, and a connecting passage (17a, 17b), which is incorporated in the end plate (7c), for connecting the two axial passages, the water separator (15) being arranged in the connecting passage (17a, 17b) and integrated in the end plate (7c).

4. Fuel cell block (1) according to Claim 3, **characterized by** a plurality of cascaded fuel cell block stages (5b, 5c), with the first axial passage being provided for the purpose of conveying operating medium out of one cascade stage (5b), and the second axial passage being provided for supplying operating medium to a subsequent cascade stage (5c).

## Revendications

1. Bloc ( 1 ) de piles à combustible ayant un certain nombre de piles à combustible planes empilées les unes sur les autres, une plaque ( 7a - 7e ) d'extrémité et un canal ( 17a, 17b, 27 ) pour du fluide de fonctionnement passant à travers la plaque ( 7a - 7e ) d'extrémité,
**caractérisé par** au moins un séparateur ( 15 ) d'eau monté au moins en partie dans le canal ( 17a, 17b, 27 ) pour du fluide de fonctionnement et intégré au moins en partie dans la plaque ( 7a, 7c ) d'extrémité.

2. Bloc ( 1 ) de piles à combustible suivant la revendication 1, **caractérisé en ce que** le séparateur ( 15 ) d'eau est incorporé complètement dans la plaque ( 7c ) d'extrémité.

3. Bloc ( 1 ) de piles à combustible suivant l'une des revendications précédentes, **caractérisé par** un premier canal et un deuxième canal axial dirigés parallèlement à la direction d'empilement des piles et par un canal ( 17a, 17b ) de communication incorporé dans la plaque ( 7c ) d'extrémité pour la mise en communication des deux canaux axiaux, le séparateur ( 15 ) d'eau étant monté dans le canal ( 17a, 17b ) de communication et étant intégré dans la plaque ( 7c ) d'extrémité.

4. Bloc ( 1 ) de piles à combustible suivant la revendication 3, **caractérisé par** plusieurs étages ( 5b, 5c ) de bloc de piles à combustible disposés à la manière d'une cascade, le premier canal axial étant prévu pour l'évacuation du fluide de fonctionnement d'un étage ( 5b ) de la cascade et le deuxième canal axial pour l'alimentation en fluide de fonctionnement d'un étage ( 5c ) de canal suivant.
